# EUROPEAN PATENT APPLICATION

(11) **EP 0 711 018 A2**
(43) Date of publication of application: **08.05.1996**
(21) Application number: 95117133.9
(22) Date of filing: 31.10.1995
(51) Int. Cl.: H02J 13/00

(54) **Modular control system for household appliances**

(30) Priority: 07.11.1994 IT TO940881
(71) Applicant: Merloni Elettrodomestici S.p.A., I-60044 Fabriano (AN) (IT)
(72) Inventor: Aisa, Valerio, I-60044 Fabriano (AN) (IT); Fontana, Claudio, I-60011 Arcevia (AN) (IT)

(57) **Abstract**

An electronic modular control system is described, apt for the management of home appliances, where at least one of the modules (MP) is connected without galvanic insulation to the voltage of the mains and is coupled with the rest of the system (MC) through a galvanically insulated bidirectional serial communication line (5;B); according to the invention the synchronisation of said insulated bidirectional serial line is taken from the frequency of the mains.

## Description

The present invention refers to an electronic system for the modular control, suitable for the management of home appliances, as described in the preamble of the attached claim 1.

The use of systems for the modular control, also known as distributed intelligence systems, is already well spread in the industry as well as in consumer complex appliances, as for instance motor-cars, where there is the problem of coordinating and managing several operating units (modules) performing almost independent activities. It is also known that the information exchange among the different operating units of a modular control system is done through serial communication systems, because such systems allow to reduce to a minimum the amount of electrical cables necessary for performing such information exchange and also the relevant cost of the wiring.

The serial lines are almost all of the synchronous type, i.e. characterised by the presence of a sync signal, generally called "clock", but there are also cases in which the serial lines are of the asynchronous type, i.e. of the type normally used in every personal computer, for instance the type known as RS232, whose hardware and software protocols are defined according to an EIA standard.

Serial lines of the synchronous type are typically suitable for modular control systems which are simple, i.e. caracterised by the fact that the control and supervising device of each module is represented by classic integrated circuits or low cost microprocessors; the major advantage of such synchronous serial lines is simplicity and low cost, while the most important limits are represented by the poor immunity to electromagnetical noise and the difficulty to be galvanically insulated with acceptable increase of cost (for instance through photo-couplers).

On the other side serial lines of the asynchronous type show typically a better immunity to noise, so that they are suitable also for modular systems in wide rooms, where the distance between two modules can reach also a few hundreds of meters; moreover serial lines of the asynchronous type can be easily insulated galvanically through low cost provisions (photo-couplers) whenever necessary, for instance when for safety reasons it is necessary to insulate them from the mains.

Serial asynchronous lines however require electronic complex and expensive devices with suitable interfaces for this type of communication.

In particular, as the use of modular control systems in the field of home appliances is concerned, the present invention is founded on the consideration of some important facts.

A first important fact is that the electric environment where the home appliance has to operate is often subjected to electromagnetic noise, sometimes also of important strength, due to the presence, inside the appliance itself, of electric loads of the inductive type (as motors, electrovalves, electromagnets, etc.).

Another important fact is that generally there is the necessity of insulating galvanically the power modules (typically 'live') from the control modules, which are normally in touch with the user and must therefore comply with the safety rules.

Last fact to consider, not less important than the others, is that costs must be carefully evaluated.

The three above said considerations show that there is the necessity of a serial communication line galvanically insulated, insensitive to noise and unexpensive.

The main aim of the present invention is therefore that of indicating a communication line which shall be unexpensive as a synchronous line, while immune to noise and easy to insulate as an asynchronous line.

This aim and other aims, which will be clear from the following description, are obtained, according to the present invention, through a modular electronic control system suitable for home appliances, having the characteristics of the attached claims.

Other objects and advantages of the present invention will result clear from the detailed description which follows and from the attached drawings, which are given only as an indicative and non-limiting example, wherein:
- Figure 1a shows the block diagram of a modular control system for home appliances, comprising a control module galvanically insulated from the mains voltage, a power module connected without galvanic insulation with the mains voltage, and a bidirectional serial line for the exchange of information between the two modules;
- Figure 1b shows, as an indicative and non-limiting example, a power module, with the relevant power actuators, coupled to the typical electric loads of a dishwasher;
- Figure 2a shows a pratical example of a low-cost bidirectional serial line galvanically insulated according to the present invention;
- Figure 2b shows a variation of the serial line of Fig. 2a;
- Figure 2c shows the timing diagram relating to the examples of Figg. 2a and 2b;
- Figure 2d shows an example of a circuit for the synchronization of the serial line of figures 2a and 2b;
- Figure 3a shows the block diagram of a possible circuit suitable for interacting, through the serial line according to the present invention, with a low-cost microcomputer, in the case that the last is operating with difficulty due to the presence of electromagnetic noise;
- Figure 3b shows a more detailed practical example of the circuit shown in figure 3a.

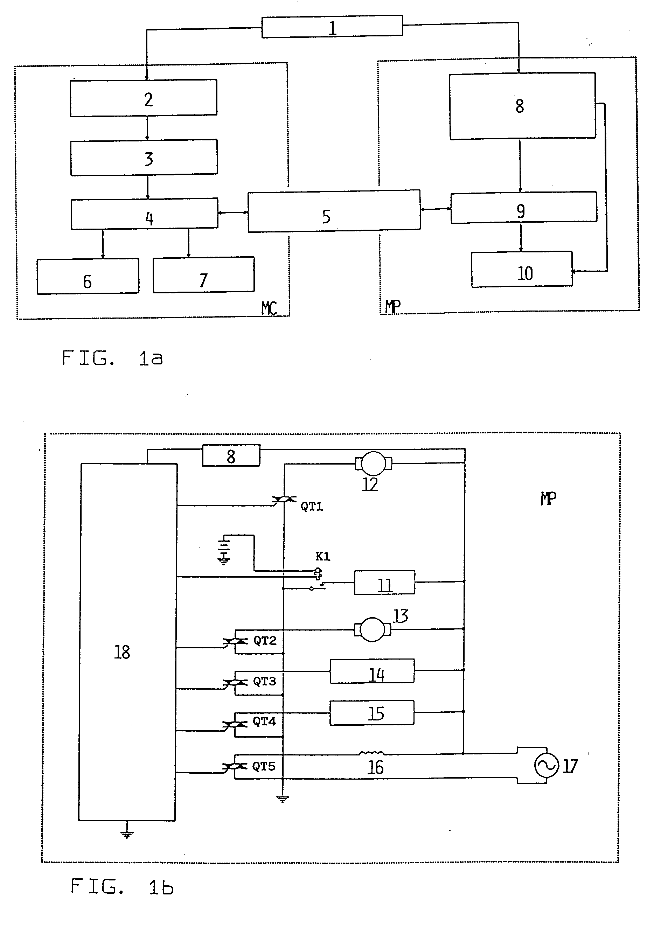

In the figure 1a, which shows the block diagram of a modular control system for home appliances, there are indicated two different modules which are connected through a bidirectional serial line galvanically insulated according to the present invention.

In the figure 1a the reference number 1 indicates a power circuit supplying the mains voltage; the MC symbol (Control Module) indicates the unit which performs the logical control of the operation of a home appliance (for instance the washing timer of a washing or dishwashing machine, or the timer of a cooking oven, or the thermostat controlling the temperature of a refrigerator, etc.) and also manages the user interface (for instance a pushbutton board and a display).

The control module MC comprises a safety transformer indicated with number 2, a stabilised power supply, indicated with number 3, a microcomputer, indicated with number 4, a sensor interface, indicated with number 6 and a user interface, indicated with number 7.

The symbol MP (Power Module) indicates the unit which controls the power actuators (triac, relay, etc.) coupled to the different electric loads inside the controlled home appliance.

In the example of figure 1a the power module (MP) comprises a stabilised power supply not insulated from the mains, indicated with number 8, a microcomputer, indicated with number 9, and a power interface, indicated with number 10.

Finally the reference number 5 indicates an insulated bidirectional serial line connecting the modules MC and MP.

The power module MP is directly connected with the mains voltage, without any galvanical insulation. In fact the less expensive way to control an electric load of low-medium power (as are almost all electric loads of a home appliance, having normally a power minor than 100 watts) is that of using electronic relays (triacs); such electronics relays are unexpensive (typically $ 0.25-0.5 each, according to the type) and their control requires only a low power, so allowing the use of unexpensive low voltage (typically 5 Volt) supply circuits, which can be obtained deriving the necessary current directly from the mains through a suitable series impedance of the ohmic or capacitive type, without the need of a more expensive voltage transformer. This technique, however, does not permit an insulation from the electric mains.

In order to give a practical indication of the advantage obtained using a power module MP directly connected to the mains voltage, let us consider the example of figure 1b, where there are shown, for explaining and non-limiting purposes only, the power actuators coupled to the typical electric loads of a dishwasher.

The actuators shown in said figure 1b are six and are represented by:
- a relay K1 having a 16 A contact, commanding a 2 KW resistance 11 for the heating of the washing water;
- a 12 A triac QT1, commanding a washing motor 12;
- a 0.8 A triac QT2, commanding a draining pump 13 of the washing water;
- a 0.8 A triac QT3, commanding an electrovalve 14 for loading the water into the dishwasher tank;
- a 0.8 A triac QT4, commanding an electrovalve 15 which controls the ionic regeneration process of the resins of the dishwasher's decalcificator;
- a 0.8 A triac QT5, commanding an electromagnet 16 controlling the dispenser of the brightener.

Moreover with the reference number 17 there is indicated the alternate voltage of the mains, which is fed to the above said actuators and, via the power supply circuit 8, to the circuit 18, represented by a microcomputer and by an actuator interface of the power module MP with the control module MC.

The use of the electromechanical relay K1, more expensive than a triac, is made necessary owing to the presence of a high power heating resistance 11 (2 KW); in fact using a triac a big and expensive cooling fin would be necessary.

All other actuators are represented by triacs, which are very cheap devices, particularly suitable for controlling low and medium power loads (up to 500 W).

The main advantages of the use of triacs are represented by the high reliability (no contacts, no wear), low cost, low power needed for the driving (the triac conduction is triggered by a very short pulse, typically one hundred of microseconds), and the possibility of controlling the power delivered to the load by chopping the mains wave.

The operating characteristics of a triac, however, require the controlling gate of the triac to be referred to the mains voltage, and therefore do not allow the insulation of the driving circuit from the mains voltage. A possible way to achieve such insulation could be to insert between the driving circuit and the triac gate an optotransistor or an optotriac, but this produces a consistent cost increase.

On the other side the most important advantages of the use of electromechanical relays are substantially represented by the possibility of controlling high value currents and by the intrinsic galvanic insulation between the controlling circuit and the power contact. The disadvantages are represented by the high cost (about $ 1 each) and the high power needed for the control (typically 0.6-0.8 mW / relay).

As a consequence, referring as an example to the 6 actuators which are typically used in a dishwasher, represented in figure 1b, we find that the total cost is about $ 2.50 ($1 for the relay, $ 0.50 for the 12 A triac and $ 0.25 each for the 0.8 A triacs); in the case of a galvanic insulation obtained through relays or triacs controlled by optotransistors, the total cost would be of at least $ 6 not considering the cost of the necessary more powerful drive.

It is therefore evident the convenience of using, for controlling the power loads of a home appliance, a not insulated module from the mains.

On the other side however, the safety rules require that the part of the electronic control system with the sensors and the user interface is galvanically insulated from the mains voltage, in order to assure the user from the danger of electrical shocks.

It is therefore necessary to assure an information exchange between two modules, one of them being 'live'. The serial line 5 according to the present invention is a low cost solution of the problem of information exchanging between two modules, one of them being connected to the mains voltage.

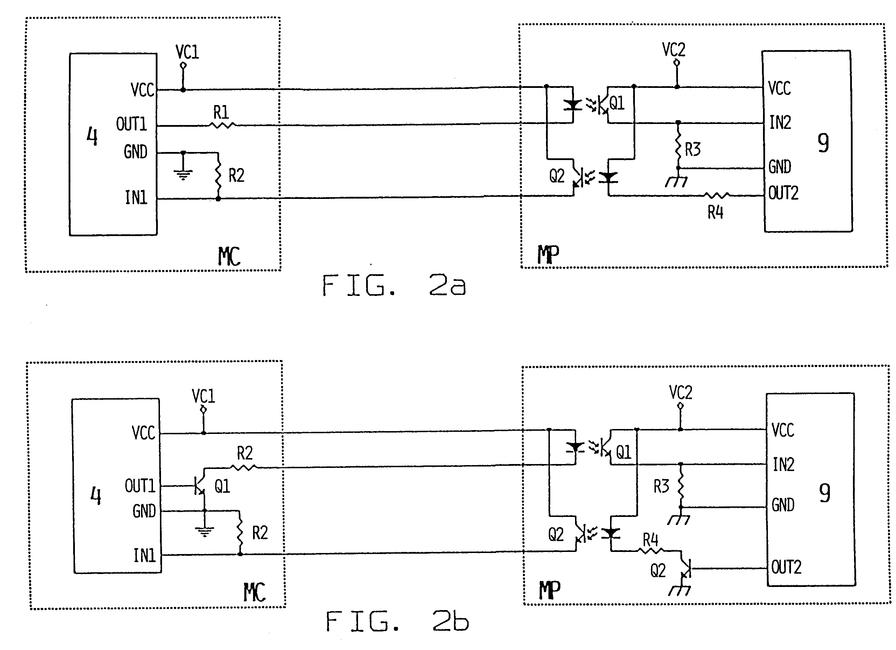

The circuitry of said serial line, realising the galvanic insulation between the two intercoupled modules MC and MP, is represented in figure 2a; in said figure there is shown the lowest cost solution, represented by two optotransistors O1 and O2 of a customary type. An alternative solution, more expensive, can be realised for example by means of optical fibers.

The voltage indicated with VC1, relating to the control module MC, is insulated from the mains, while the voltage VC2, related to power module MP, is not insulated.

The two channels of the serial line according to the invention are symmetrical and complementary and represent the reciprocal exchanging means of information between the two electronic modules MC and MP.

Each one of the optotransistors O1 and O2 is activated by the circulation in the relevant light emitting diode of a suitable current (typically 10 mA or less, according to the type of the used optotransistor), limited respectively by resistors R1 and R4.

In order to better understand the operation of the circuit of figure 2a, it is necessary to point out that, for generating a high logic level at the input IN2 of the microprocessor 9 of the power module MP (slave module), the microprocessor 4 of the control module MC (master module) must set its output OUT1 at a low logic level, so that the optotransistor O1 is activated by the current flowing through R1. Correspondently when the output OUT2 of the slave module 9 is low, the logic signal at the input IN1 of the master module 4 is high; i.e. the master and the slave, in the specific example indicated in figure 2a, work with inverting logic. The choice of an inverting logic has the purpose of allowing the direct driving of the optoinsulator by the respective microcontroller and of reducing the number of the connecting wires.

In figure 2b there is shown an alternative solution, which uses a non-inverting logic; it has to be noted that the use of a non-inverting logic represents an increase of cost of the system, due to the presence of the two additional transistors indicated in figure 2b with Q1 and Q2.

Of course also other solutions are possible, using inverting or non-inverting logics; such solutions are not shown here because they are not strictly relevant to the objects of the present invention.

The novelty element of the synchronous serial line according to the invention, shown in figures 2a and 2b, is represented by the lack of a channel related to the synchronisation signal (clock), which normally characterises the synchronous solutions.

In a certain way, according to the invention, a communication line is indicated, which has the typical characteristics of an asynchronous line, as immunity to noise and easy of insulation are concerned, but which is however fitted with the clock signal, typical of the synchronous lines.

The main characteristic of the system according to the present invention is indeed represented by the fact that the clock signal for the insulated bidirectional serial line is taken from the mains frequency (50-60 Hz).

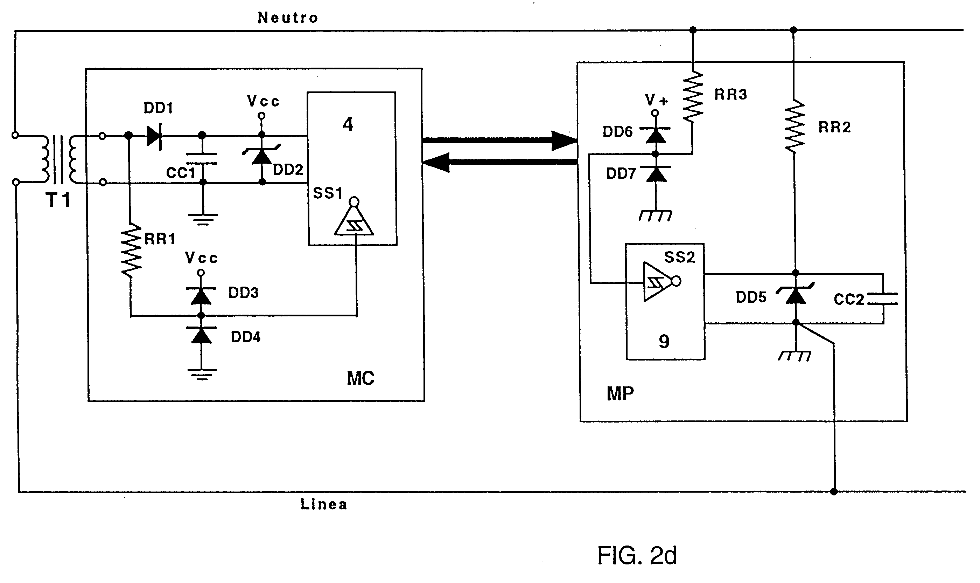

In the figure 2d there is represented a possible implementation of a circuit for taking the clock signal for the serial line according to the invention.

In said figure there are represented the two intercoupled modules: control module MC, insulated from the mains voltage by means of a transformer T1 and power module MP directly connected to the mains.

In both cases the clock signal is taken by means of a resistor having suitable value and size (RR1 and RR3), connecting the sinusoidal signal to the high impedance inputs (CMOS) of both microcontrollers 4 and 9; in the example shown said inputs are protected by a couple of diodes (DD3-DD4, DD6-DD7), even if some microcontrollers (for instance those of the ST62XX family of the firm SGS-Thomson) do not require such protection, which is already fitted inside them.

The inputs of the microcontrollers may be also provided with hysteresis wave squarers (indicated in the figure with SS1 and SS2), in order to avoid oscillations on the signal front; this provision however is not strictly necessary if the transitions (zero crossing) of the sinusoidal signal are acquired via software (polling) instead of being detected via hardware (commanding an interrupt). In the case of software acquired signals in fact there is the possibility of fixing the problem of possible oscillations of the signal fronts by means of a simple software filtering.

The two stabilised power supplies for the MC and the MP modules are realised in a simple and unexpensive way, respectively through the groups of components DD1-DD2-CC1 (MC module) and DD5-CC2 (MP module).

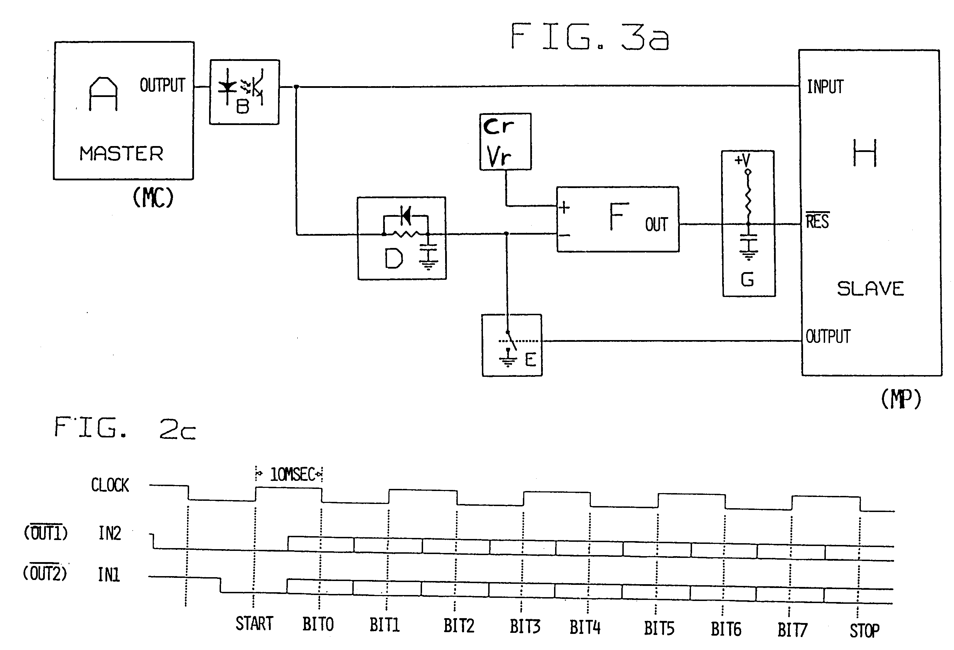

In the figure 2c there is shown the time diagram of the bidirectional flow of data of the serial line according to the invention, as represented in figures 2a and 2b.

Examining said time diagram it is evident that the two interconnected modules transmit each other one bit every 10 msec. (assuming that the mains frequency is 50 Hz) and more generally, one bit every half period of the mains voltage; therefore, in the case the mains frequency is 50 Hz, the two modules transmit each other one byte of information every 80 msec.

Such a time interval is perfectly compatible with the necessity of the control system of a home appliance, due to the fact that, for the simple function performed by the power module MP (the latter only has to activate/disactivate the actuators), the information exchange is limited to one, or a few bytes (provided that a more important exchange protocol has to be realised), and therefore the exchange will last in any case a fraction of a second.

Using a suitable protocol for checking the correctness of the exchanged data, it is possible to obtain a good reliability of the communication, as demonstrated by the several practical tests performed, even in presence of high electromagnetic noise.

An example of communication protocol is graphically represented in the figure 2c itself, where the control module MC (OUT1; IN1) performs the function of master and the MP module (OUT2;IN2) performs the function of slave.

When no communication takes place, both modules MC and MP keep their outputs OUT1 and OUT2 at high level.

The start of communication signal is supplied by the master module and is represented by setting at low level the signal applied to the input IN2 of the slave module; the slave module shall reply setting at low level also the signal applied to the input IN1 of the master module.

The verification that the slave module has replied, represents for the master module the synchronisation signal and the enable signal for the transmission of the eight bits constituting a byte of information. The transmission of said byte of information ends with a level kept high (stop bit) until the master module will supply again a low level (start bit) that is the start of the next byte.

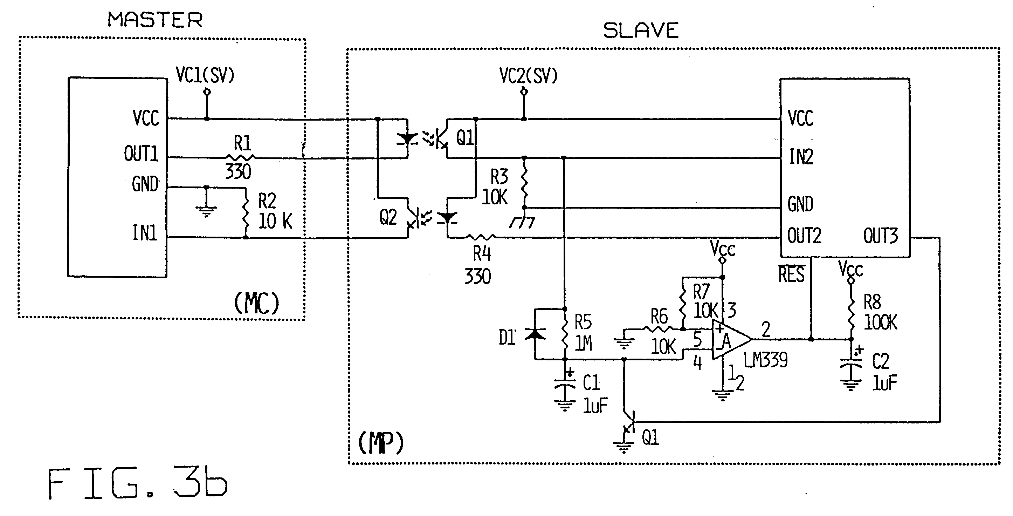

Should the slave module not respond within a determined time period (which is 10 msec if the mains frequency is 50 Hz), the master module acknowledges the failure and may eventually act on the slave module for fixing the problem, as indicated in the figures 3a and 3b, which represent possible circuit patterns apt to interact, through the serial line according to the present invention, with a low cost microcontroller when the latter shows malfunctioning because of electromagnetic noise.

The meaning of the blocks of figure 3a is as follows:
- block A indicates the control module (MC) acting as the master;
- block B indicates the opto-insulated data transmission line;
- block Cr indicates a circuits for generating a reference voltage;
- block D indicates an unidirectional delay line represented by a RC network and a diode;
- block E indicates an electrically controlled switch;
- block F indicates a voltage comparator;
- block G indicates a typical reset circuit with a resistance/capacity network;
- block H indicates the power module (MP) acting as the slave.

The serial information sent out by the master A arrives to the input of the slave H through the optoinsulator B.

The binary electric signal coming out from the optoinsulator B is applied, besides to the input of the circuit H, also to the delay line D, represented by a resistance/capacity network with a diode connected in the reverse way; the delay circuit D comprises also an unidirectional element so that its behaviour depends from the direction of the current.

The resistance is of sufficiently high value (for instance 1 Mohm) and the value of the capacity is such as to realise a time constant RC big enough (for instance C=1microF in order to have RC=1sec).

In normal operating conditions the capacitor C is slowly charged through the resistor R (1Mohm) each time the transmitted bit is at high logic level, and is quickly discharged (discharging time constant is 100 times smaller than charging one) through the diode each time that the transmitted bit is at low level.

As a consequence the voltage applied to the negative terminal of the comparator F is kept at a very low level (a few tens of millivolts).

If the master detects an anormal behaviour of the slave, it can intervene keeping constantly high the output level of the optoinsulator B so producing, after a certain time (about 1 second, if C=1microF and R=1 Megaohm), the trespassing of the voltage threshold existing on the positive terminal of comparator F.

At the moment when the voltage applied to the negative terminal of the comparator F becomes higher than the reference voltage Vr applied to the positive terminal, the output OUT of the same comparator goes low so driving the slave microcontroller H in the reset condition. To exit from the reset condition of the microcontroller, after the end of the reset routine, one of the outputs of the microcontroller is used, so that a value is produced, commanded by the microcontroller itself, apt to close the switch E. The closing to ground of the switch E, produced at the end of the reset routine of the microcontroller H, causes the quick discharging of the capacitor of the delay line D, so zeroing the level of the signal applied to the negative terminal of the comparator F and restoring the normal operating condition of the microcontroller.

The microcontroller, after the reset routine, will resume the correct execution of its programme, first of all changing the status of its output connected to the switch E, so that the mechanism of forced reset by the master may be set up again.

Therefore, by means of the circuit sketched in figure 3a and shown in more detail, even as a non limiting example, in figure 3b, the control module (master) is able to command, in case of necessity, a reset of the power module (slave) through the same optoinsulated communication line, keeping it, for the purpose, at the high level for a sufficiently long time interval (e.g. 1 sec), according to the values R and C of the delay line D.

More generally, in the case that also the master is provided with a reset circuit as indicated in figures 3a and 3b, the control between the two microcontrollers will be of reciprocating type and the system will be totally protected against the electric noise.

From the description given, the characteristics of the control system for home appliances according to the invention will result clear as well as the relevant advantages.

## Claims

1. System for the electronic control of the modular type, suitable for the management of home appliances where at least one of the electronic modules (MP) is connected to the voltage of the mains without galvanic insulation and is coupled with the rest of the system (MC) through a galvanically insulated bidirectional serial communication line (5;B), characterised by the fact that the synchronisation of said bidirectional serial line is taken from the frequency of the mains.

2. System for the electronic control of the modular type, suitable for the management of home appliances where at least one of the electronic modules (MP) is connected to the voltage of the mains without galvanic insulation and is coupled with a second electronic module (MC) through a galvanically insulated bidirectional serial communication line, characterised by the fact that said serial line is of the synchronous type and that a channel for the clock signal is not provided, the clock signal for the control of said serial line being taken from the frequency of the mains and flowing in one of the two channel representing the physical means for the reciprocal exchange of information between the two electronic modules.

3. System according to at least one of the preceding claims, characterised by the fact that both the said electronic modules (MP,MC) comprise at least one microcontroller (4,9).

4. System according to at least one of the preceding claims, characterised by the fact that the synchronisation signal is obtained through a resistance of suitable value and size (RR1,RR3), coupling the sinusoidal signal to a high impedance input (CMOS) of a microcontroller (4,9), where in particular there are provided protection means (DD3-DD4,DD6-DD7) of said high impedance input (CMOS).

5. System according to claim 4, characterised by the fact that the microcontroller (4,9) shows a wave squarer (SS1,SS2) for avoiding oscillations on the signal front.

6. System according to claim 4, characterised by the fact that the signal transitions (zero crossings) of the sinusoidal signal are acquired via software (polling) rather than via hardware (interrupt), the possible oscillations of the signal front being in said way avoided through a simple filtering, realised in particular via software.

7. System according to at least one of the preceding claims, characterised by the fact that the module which is connected to the voltage of the mains without galvanic insulation is a power module (MP) and that the module which is coupled to the power module through said serial line, particularly a control module (MC) of said power module (MP), is galvanically insulated from the voltage of the mains.

8. System according to at least one of the preceding claims, characterised by the fact that said bidirectional serial line (B) is galvanically insulated by means of optoinsulating devices (O1,O2), said optoinsulating devices comprising in particular optotransistors, activated by means of a suitable current circulating in the relevant light emitting diodes and limited through a resistance means (R1,R4).

9. System according to at least one of the preceding claims, characterised by the fact that said electronic modules (MC,MP), interconnected through said serial line, work with inverting logic, particularly for the purpose of allowing the direct driving of said optoinsulators through the relevant microcontrollers and of limiting to a minimum the number of the connecting wires.

10. System according to at least one of the preceding claims from 1 to 6, characterised by the fact that said electronic modules (MC,MP), interconnected through said serial line, work with non-inverting logic, transistor devices (Q1,Q2) being provided for making the logic levels compatible.

11. System, according to the claim 1 or 2, characterised by the fact that the two interconnected modules (MC,MP) transmit each other one bit every half period of the frequency of the voltage of the mains.

12. System according to at least one of the preceding claims, characterised by the fact that there is provided a communication protocol providing the possibility that the two electronic modules interconnected through said serial line, perform a reciprocal control of the their correct operation and/or intervene in the case that an operation anomaly of the other module is detected.

13. System according to at least the preceding claim, characterised by the fact that said possibility of intervening, in case of anomaly, of each one of the modules in respect of the other, is based on an electronic circuit (fig. 3a-3b) apt to be controlled through said insulated serial line, said electronic circuit comprising in particular a delay circuit (D), a circuit (Cr) apt to supply a reference voltage (Vr), a controlled switch (E), a voltage comparator (F) and a reset circuit (G).

14. System according to at least one of the preceding claims, characterised by the fact that the coupling of two modules comprises a delay circuit (D), said delay circuit comprising in particular an unidirectional conductor, so that its behaviour is different according to the direction of the current.

15. System according to at least one of the preceding claims, characterised by the fact that the coupling of two modules comprises
- a circuit detecting a malfunctioning (D,E,Cr,F);
- a delay circuit (D) determining the time interval within which a reset circuit intervenes for restoring the correct operation (A,H,D,Cr,F,G) and
- a threshold circuit (F,Cr,G) producing a signal of correct operation.

16. System for the modular control, suitable for the management of home appliances where at least one of the electronic modules (MP) is connected to the voltage of the mains without galvanic insulation and is coupled with a second electronic module (MC) through a galvanically insulated bidirectional serial communication line (5;B), characterised by the fact that there is provided a communication protocol providing the possibility that the two electronic modules interconnected through said serial line, perform a reciprocal control of the correct operation and/or intervene in the case that an operation anomaly of the other module is detected.

17. Method for the control of home appliances of the modular type, where there are provided two electronic modules, in particular a first module which performs the controller function (MC) and a second module which performs the function of being controlled (MP), where at least one (MP) of the two modules is connected with the voltage of the mains without galvanic insulation and is coupled to the other module (MC) through a galvanically insulated bidirectional serial communication line (5;B), said serial line providing only two symmetrical complementary channels representing the means for the reciprocal exchange of information between the two modules (MP,MC), characterised by the fact that the synchronisation signal (clock) for the control of said bidirectional serial line is taken from the frequency of the mains and the communication protocol between the two modules provides in particular for transmitting one bit every half period of the voltage of the mains (in the case that the frequency of the mains is 50 Hz).

18. Method according to the preceding claim, characterised by the fact that there is provided a communication protocol between the two modules for verifying the correctness of the data exchanged between the two modules, said communication protocol providing that:
- in the non communication condition, both modules keep the respective outputs at the high logic level;
- the communication start signal is delivered by the controller module (master) which sets to a low level the signal applied to the communication input of the controlled module (slave);
- the controlled module (slave) replies setting in turn to a low level the signal applied to the communication input of the controller module (master);
- the verification of the occurred reply by the controlled module (slave) represents for the controller module (master) the synchronisation signal and the enabling for the subsequent transmission of the bits forming a byte of information;
- the transmission of said byte of information ends with a level maintained high (stop bit) until the controller module will deliver again a low level (start bit) of start of transmission of the next byte.

19. Method according to the preceding claim, characterised by the fact that in the case that the controlled module (slave) does not reply within a determined time interval (e.g. 10 msec for a mains frequency of 50 Hz), the controller module (master) acknowledges the malfunctioning and can eventually intervene on the controlled module (slave) in order to restore the correct operation.

20. Method according to at least one of the preceding claims, characterised by the fact that the serial pieces of information sent out from the output of a controller module (master) arrive to the input of a controlled module (slave) through an optoinsulator, the electric binary signal coming out from the optoinsulator being in particular applied, besides to the input of the controlled module (slave) also to a delay circuit.

21. Method according to at least one of the preceding claims, characterised by the fact that an electronic controller module (master) is apt to command, in case of necessity, a reset of the electronic controlled module (slave), through the same insulated communication line, the control between the two modules being in particular of the reciprocal type, in the case that they both show a reset circuit.

22. Method for the control of the correct operation of an electronic modular system apt to the management of home appliances, comprising at least two electronic modules (MC,MP) each one comprising a microcontroller, characterised by the the following steps:
- detecting, through a detector circuit (E), the malfunctioning of a module;
- commanding, through a delay circuit (D), a maximal duration for said malfunctioning;
- activating, through a reset circuit (F,Cr), a signal of restoration of the correct operation, when said maximal duration of malfunctioning is exceeded;
- applying said restoration signal to a reset input of the microcontroller of the malfunctioning module.
